(19) Europäisches Patentamt
European Patent Office
Office européen des brevets

(11) Numéro de publication : **0 442 784 A1**

(12) # DEMANDE DE BREVET EUROPEEN

(21) Numéro de dépôt : **91400296.9**

(51) Int. Cl.$^5$ : **C08G 79/02,** C01B 21/098

(22) Date de dépôt : **07.02.91**

(30) Priorité : **13.02.90 FR 9001689**

(43) Date de publication de la demande :
**21.08.91 Bulletin 91/34**

(84) Etats contractants désignés :
**AT BE CH DE DK ES FR GB GR IT LI LU NL SE**

(71) Demandeur : **ATOCHEM**
**4 & 8, Cours Michelet La Défense 10**
**F-92800 Puteaux (FR)**

(72) Inventeur : **Chambrette, Jean-Paul**
**9 Rue Caplanne**
**F-64140 Billere (FR)**
Inventeur : **Pagniez, Guy**
**2 Bois de l'Eglise**
**F-64230 Poey de l'Escar (FR)**
Inventeur : **Potin, Philippe**
**9 Rue des Paquerettes**
**F-64140 Billere (FR)**

(74) Mandataire : **Rochet, Michel et al**
**ATOCHEM Département Propriété Industrielle**
**F-92091 Paris la Défense Cédex 42 (FR)**

(54) **Procédé de préparation de polyphosphazènes par substitution de polydichlorophosphazène.**

(57) L'invention concerne un procédé préparation de polyphosphazène par substitution de polydichlorophosphazène au moyen d'agent nucléophile en milieu hydrocarbure.
Selon ce procédé, la réaction s'effectue en présence d'un polyéther.
Le procédé permet d'obtenir un taux de substitution élevé.

EP 0 442 784 A1

## PROCEDE DE PREPARATION DE POLYPHOSPHAZENES PAR SUBSTITUTION DE POLYDICHLOROPHOSPHAZENE

L'invention a pour objet un procédé de préparation de polyphosphazènes par substitution de polydichlorophosphazène en milieu hydrocarbure.

Les polyphosphazènes représentent une famille de polymères constitués d'une chaine minérale phosphoazotés, l'atome de phosphore portant des substituants de nature variée. Ces polymères peuvent notamment comprendre une pluralité de motifs de formule :

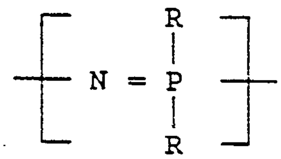

(I)

dans laquelle les symboles R, qui peuvent être identiques ou différents dans un même motif ou d'un motif à l'autre peuvent représenter des radicaux choisis dans le groupe constitué par les radicaux alkyle, aryle, alkoxy, fluoroalkoxy, aryloxy, alkyl- ou arylsulfure, alkyl- ou arylamino.

Ces polymères sont obtenus à partir du polydichlorophosphazène (II), en substituant les atomes de chlore par des composés à caractère nucléophile selon le schéma :

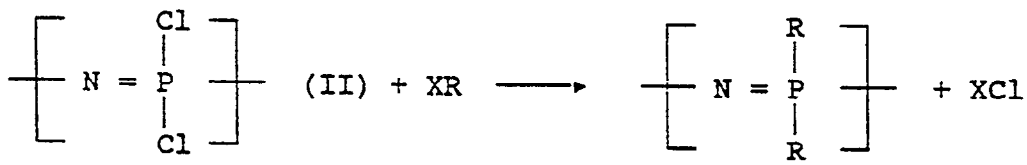

(II) + XR

+ XCl

X désignant notamment un atome d'hydrogène ou un métal alcalin, R ayant la signification donnée précédemment.

De nombreux composés nucléophiles XR sont décrits dans la littérature. Les principaux sont les phénates et les alcoolates (plus particulièrement les alcoolates fluorés) associés à l'ion sodium.

Deux types de milieu réactionnel sont proposés pour réaliser la substitution :

– Les éthers (tétrahydrofuranne, éthers de l'éthylène glycol, dioxanne) qui permettent d'opérer en phase homogène (H.R. Allcock et Coll. Inorg. Chem. 5 (10), 1709, 15, (1966) Austin et Coll. Macromolecules 16 (5), 719-22 (1983).

– Les hydrocarbures dans lesquels les phénates et les alcoolates sont insolubles ou partiellement solubles (Austin et Coll. Macromolecules 16 (5), 719-22 (1983), H.R. Penton US 4,514,550).

La substitution en milieu hydrocarbure (benzène, toluène, xylène, cyclohexane, etc ...) présente beaucoup d'avantages par rapport au milieu éther, parmi lesquels on peut citer : moindre coût et toxicité souvent plus faible, facilité de séchage, moins de dégradation du polymère lors de la substitution, facilité d'élimination du chlorure de sodium sous-produit par la substitution, soit par lavage à l'eau du milieu réactionnel, soit par simple filtration.

Par contre, quel que soit l'hydrocarbure, certains agents nucléophiles y sont complètement insolubles et de ce fait sont incapables d'atteindre les atomes de chlore au-delà d'un certain taux de conversion. Le polyphosphazène conserve un taux de chlore résiduel élevé et il s'ensuit, lors des extractions et lavages, une dégradation partielle du polymère qui entraîne une masse moléculaire plus faible. Il s'ensuit également un rendement de substitution relativement faible.

Par ailleurs la substitution des atomes de chlore du polydichlorophosphazène par les alcoolates pose des problèmes particuliers. On sait que, simultanément à la substitution, il s'effectue une réaction compétitive de ruptures de chaîne tendant à réduire fortement la masse moléculaire moyenne et à produire une fraction de très petites masses. Or cette réaction compétitive de dégradation est beaucoup plus prononcée avec les alcoolates qu'avec les phénates. Les alcoolates fluorés posent en plus le problème de leur dégradation par attaque de leurs atomes de fluor par leur propre fonction alcoolate. Ainsi, les rendements indiqués par la littérature pour la substitution par les alcools fluorés en milieu éthéré, sont-ils très faibles H.R. Allcock et Coll. Inorg. Chem. 5 (10), 1709, 15, (1966) ou K.A. Reynard et Coll. US 3,896,058).

Ces problèmes particuliers à la substitution par les alcoolates peuvent être minimisés en effectuant la substitution en milieu hydrocarbure et à température aussi basse que possible, de façon à réduire le caractère nucléophile, donc l'agressivité des anions alcoolates. Mais en opérant dans ces conditions, il n'est pas possible d'atteindre une substitution totale des atomes de chlore par suite de l'insolubilité des alcoolates d'autant plus complète qu'on opère à température plus basse.

Pour résoudre ces problèmes liés au manque de solubilité aussi bien de certains phénates que des alcoolates, P.E. Austin et Coll. Macromolecules 16 (5), 719-22 (1983) ont proposé d'effectuer la substitution en présence de sels d'ammoniums quaternaires.

Dans le cas des phénates, ce procédé ne permet pas d'opérer exclusivement en présence d'hydrocarbure en tant que solvant, sans qu'il y ait un arrêt de la substitution à un taux de conversion insuffisant et donc un taux de chlore résiduel élevé dans le polymère final. La stabilité thermique des sels d'ammoniums quaternaires est en effet trop limitée pour permettre d'opérer longtemps aux températures élevées nécessitées par la substitution par des phénates présentant un encombrement stérique élevé. Certes l'emploi de sels d'ammoniums quaternaires permet d'effectuer la substitution par les alcoolates en milieu purement hydrocarbure, mais les rendements restent faibles (P.E. Austin et Coll. Macromolecules 16 (5), 719-22 (1983).

L'invention propose donc un procédé de préparation de polyphosphazène par substitution des atomes de chlore de polydichlorophosphazène.

Elle propose en particulier un procédé permettant un taux élevé de substitution au moyen de phénates et alcoolates alcalins.

Elle propose un procédé conduisant à un rendement élevé en polymère substitué.

D'autres avantages du procédé conforme à l'invention apparaîtront à la lecture de ce qui suit.

Le procédé conforme à l'invention consiste à effectuer la substitution des atomes de chlore d'un polydichlorophosphazène au moyen d'agents nucléophiles en opérant en milieu hydrocarbure, et est caractérisé en ce que la réaction de substitution est effectuée totalement ou partiellement en présence d'un polyéther.

D'une manière générale, le polyéther peut être utilisé à un taux d'au moins 0,1 % en poids par rapport au réactif nucléophile. De préférence ce taux n'excède pas 10 %.

Pour présenter une efficacité suffisante, les polyéthers doivent être constitués par une chaîne comprenant un nombre de fonctions éther au moins égal à 4. Cette chaîne peut être terminée à chaque extrémité par une fonction hydroxyle, par une fonction éther ou bien être terminée par une fonction hydroxyde sur une extrémité et éther sur l'autre extrémité.

Cette chaîne peut être notamment constituée d'un enchaînement d'oxyde d'éthylène, d'oxyde de propylène ou d'une combinaison des deux.

Ces polyéthers, qui seront appelés ci-après "catalyseurs", peuvent être représentés par la formule ci-après :

$$R_1 - O \left[ C_xH_{2x} - O \right]_n R_2 \qquad (III)$$

dans laquelle n représente un nombre au moins égal à 4, x représente 2 ou 3, les symboles $R_1$ et $R_2$, qui peuvent être identiques ou différents, peuvent représenter un atome d'hydrogène, un radical alkyle renfermant de 1 à 24 atomes de carbone, un radical aryle mono ou polycyclique renfermant jusqu'à 18 atomes de carbone ou un radical alkylaryle ou aralkyle dont les parties alkyle et aryle sont telles que définies ci-avant.

Dans cette formule III n est en général supérieur à 20 et de préférence compris entre 50 et 200.

Parmi ces polyéthers, on mentionnera tout particulièrement les polyéthers de formule III dans lesquels l'un des symboles $R_1$ ou $R_2$ représente un atome d'hydrogène et l'autre un radical alkylaryle et en particulier un radical alkylaryle renfermant de 8 à 20 atomes de carbone.

Selon l'invention, l'introduction du catalyseur peut être effectuée à tout moment au cours de la substitution. Elle peut être effectuée dès le départ, en même temps que l'introduction des autres réactifs. Elle peut également être effectuée après un temps suffisant pour permettre une conversion aussi complète que possible en l'absence de ce catalyseur.

Ainsi qu'il a été précisé, la réaction de substitution est réalisée en milieu hydrocarbure et celui-ci peut consister en un hydrocarbure aromatique, cycloaliphatique ou aliphatique tel que l'un des hydrocarbures cités plus haut ou un mélange d'hydrocarbures.

On ne sortirait pas du cadre de l'invention en utilisant en tant que solvant du milieu de substitution, un mélange d'hydrocarbures et d'éthers, ces derniers pouvant être choisis par exemple parmi les produits cités plus haut. L'introduction de solvants éthérés peut être effectuée initialement en mélange avec l'hydrocarbure ou dans le milieu en cours de réaction de substitution.

La réaction de substitution est généralement effectuée à une température comprise entre environ 0°C et 220°C en fonction notamment de l'agent nucléophile utilisé à une pression fixée par la tension de vapeur du solvant.

La mise en oeuvre du procédé conforme à l'invention permet d'obtenir des polyphosphazènes avec un rendement élevé en polymère et un rendement de substitution voisin de 100 %, et de toute manière supérieur à 95 %, ledit polymère qui constitue un autre objet de l'invention possédant une masse moléculaire élevée.

**EXEMPLE 1**(comparatif)

**1a/** On introduit dans un réacteur pressurisé à l'azote 18,13 g (0,193 mole) de phénol et 225 g de xylène, 50 g de xylène sont distillés de façon à assurer la déshydratation du milieu. Le taux d'humidité est ainsi réduit à moins de 10 ppm. On ajoute à cette solution 5,15 g (0,172 mole) d'hydrure de sodium. La réaction de formation du phénate de sodium est effectuée en 2 heures à 140°C sous agitation.

**1b/** La suspension de phénate de sodium dans le xylène est refroidie à 120°C. On introduit à cette température 9, 06 g (0, 156 équivalent chlore) de polydichlorophosphazène en solution dans 18 g de trichlorodiphényle. On laisse réagir 24 heures à 140°C.

Le mélange réactionnel est ensuite neutralisé par HCl concentré et filtré sur une couche de terre d'infusoires. Le xylène est évaporé jusqu'à obtention d'un sirop et le reliquat est versé dans 500 ml de méthanol. Après essorage, le polymère est redissous dans le minimum de tétrahydrofuranne (THF) et à nouveau précipité dans 500 ml de méthanol. Cette dernière opération est répétée encore une fois. Le polymère final est enfin séché à 80°C sous vide (pression absolue ramenée à 133,32 Pa). On obtient 12,86 g de polydiphénoxyphosphazène, soit un rendement de 71,3 %. Ce polymère présente les caractéristiques suivantes :

| | |
|---|---|
| Taux de chlore résiduel : | 0,64 % en poids |
| Viscosité intrinsèque : | 64,3 ml/g |
| Mw (par diffusion de la lumière) : | 530.000 |

**EXEMPLE 2**

La préparation de phénate de sodium est effectuée selon le mode opératoire 1a, à partir de 18,24 g (0,194 mole) de phénol, 225 g de xylène et 5,16 g (0,172 mole) d'hydrure de sodium.

La réaction de substitution est effectuée selon 1b avec 8,88 g (0,153 équivalent chlore) du même polydichlorophosphazène. Le mélange réactionnel est maintenu ainsi pendant 20 h à 140°C.

On ajoute ensuite 0,44 g de nonyl phénol éthoxylé par 100 molécules d'oxyde d'éthylène pour une mole de nonyl phénol (2,2 % par rapport au poids du phénate de sodium). Le mélange réactionnel est maintenu pendant 20 heures à 120°C.

Le polydichlorophosphazène est isolé et purifié selon le processus décrit en 1b. On obtient 14,78 g (rendement : 83,6 %) d'un polymère dont les caractéristiques analytiques sont les suivantes :

| | |
|---|---|
| Taux de chlore résiduel : | 0,062 % en poids |
| Viscosité intrinsèque : | 83,6 ml/g |
| Mw (par diffusion de la lumière) : | 809.000 |

**EXEMPLE 3**

Dans un réacteur de 30 l équipé d'une agitation par turbine et pressurisé à l'azote, on introduit 4445 g de toluène, 14504 g de xylène et un mélange de phénols comprenant 49,94 g d'eugénol (0,304 mole), 496 g de phénol (5,271 moles) et 815 g de p.éthylphénol (6,671 moles). Cette solution est séchée par distillation de 5266 g de solvant (taux d'humidité ramené à moins de 10 ppm). On introduit ensuite 253 g de sodium (11 moles). Le milieu est porté à reflux et la vitesse d'agitation est augmentée progressivement jusqu'à 3000 t/mn. Le dégagement d'hydrogène cesse complètement au bout de 40 mn et l'ensemble des conditions opératoires est maintenu pendant encore 2 heures.

Le mélange réactionnel est refroidi à 110°C et on y introduit 571,83 g de polydichlorophosphazène (9,86 équivalents Cl) en solution dans 1235 g de trichlorobenzène. L'ensemble est maintenu à 120°C pendant 20 heures au bout desquels on ajoute 32 g de nonyl phénol éthoxylé par 100 molécules d'oxyde d'éthylène. Le mélange réactionnel est maintenu pendant encore 20 heures à 120°C.

Après refroidissement, le milieu est légèrement acidifié par ajout de HCl concentré et filtré sur un filtre revêtu d'une couche de terre d'infusoires. Il est ensuite concentré jusqu'à environ un tiers de son volume et précipité dans 60 l de méthanol. La gomme recueillie par précipitation est ensuite lavée dans un malaxeur par 2 fois 7 l d'isopropanol, 1,5 l puis 3 fois 7 l d'éthylène glycol, 1,5 l d'isopropanol et enfin 7 l d'isopropanol. La

gomme lavée est mise à séchée dans une étude à 80°C sous vide (pression absolue de 66,6 Pa). On obtient 1019 g de polymère (soit un rendement de 77,4 %) dont les caractéristiques sont les suivantes :

| | |
|---|---|
| Taux de chlore résiduel : | 99 ppm |
| Viscosité intrinsèque : | 77 ml/g |
| Mw (par diffusion de la lumière) : | 880.000 |

## EXEMPLE 4

Dans un réacteur pressurisé à l'azote, on réalise une suspension contenant 16,10 g d'une dispersion de NaH à 58,5 % dans l'huile (soit 9,42 g ou 0,392 mole de NaH pur) et 201,30 g de benzène. En maintenant la température du réacteur à 4°C, on introduit ensuite une solution contenant 29,40 g (0,294 mole) de trifluoroéthanol, 30,53 g (0,151 mole) d'un alcool de formule $H(CF_2)_{3,4}CH_2OH$ et 106,54 g de benzène. Cette addition est effectuée en 2 heures. Le mélange réactionnel est maintenu 4 heures supplémentaires sous agitation, à la température de 4°C.

On ajoute ensuite 19,72 g de polydichlorophosphazène (soit 0,340 équivalent chlore) en solution dans 75,98 g de benzène. Cet ajout est effectué en 10 mn en maintenant la température du réacteur entre 6 et 7°C. Au bout de 30 mn, on laisse le mélange réactionnel revenir à la température ambiante et on ajoute une solution contenant 1,4 g de nonyl phénol éthoxylé par 100 molécules d'oxyde d'éthylène et 360 g de THF. Le mélange réactionnel est maintenu 1,5 heure à 30°C. La température est montée progressivement en 2 heures jusqu'à 47°C. Le mélange réactionnel est enfin laissé pendant 18 heures à la température ambiante.

L'ensemble est ensuite neutralisé par ajout d'HCl-N, évaporé à sec, dissous dans l'acétone et filtré pour éliminer NaCl. Le filtrat est concentré jusqu'à environ 70 ml et précipité dans 500 ml d'hexane. Le précipité est à nouveau par deux fois dissous dans l'acétone, concentré et précipité dans l'hexane, puis séché à 80°C sous vide (pression absolue de 133,32 Pa).

On obtient ainsi 47,45 g (rendement 90,7 %) d'un polymère dont les caractéristiques sont les suivantes :

| | |
|---|---|
| Taux de chlore résiduel : | 222 ppm |
| Viscosité intrinsèque : | 65,6 ml/g |
| Mw (par diffusion de la lumière) : | 1.000.000 |

### Revendications

1. Procédé de préparation de polyphosphazène par substitution des atomes de chlore de polydichlorophosphazène au moyen d'agents nucléophiles en opérant en milieu hydrocarbure, caractérisé en ce que la réaction de substitution est effectuée totalement ou partiellement en présence d'un polyéther.

2. Procédé selon la revendication 1, caractérisé en ce que le polyphosphazène comprend une pluralité de motifs de formule

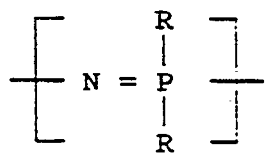

(I)

dans laquelle les symboles R, qui peuvent être identiques ou différents, à l'intérieur d'un même motif ou d'un motif à l'autre peuvent représenter des radicaux alkyle, aryle, alkoxy, fluoroalkoxy, aryloxy, alkyl- ou arylsulfure, alkyl- ou arylamino.

3. Procédé selon l'une quelconque des revendications 1 ou 2, , caractérisé en ce que l'agent nucléophile est choisi par les composés de formule XR, dans laquelle le symbole R représente un atome d'hydrogène ou un métal alcalin.

4. Procédé selon l'une quelconque des revendications 1 à 3, caractérisé en ce que le polyéther répond à la formule :

$$R_1 - O \left[ C_xH_{2x} - O \right]_n R_2$$

dans laquelle n représente un nombre au moins égal à 4, x représente 2 ou 3, les symboles $R_1$ et $R_2$, qui peuvent être identiques ou différents, peuvent représenter un atome d'hydrogène, un radical alkyle renfermant de 1 à 24 atomes de carbone, un radical aryle mono ou polycyclique renfermant jusqu'à 18 atomes de carbone ou un radical alkylaryle ou aralkyle dont les parties alkyle et aryle possèdent la signification donnée ci-avant.

**5.** Procédé selon la revendication 4, caractérisé en ce que n est supérieur à 20 et de préférence compris entre 50 et 200.

**6.** Procédé selon l'une quelconque des revendications 4 ou 5, caractérisé en ce que l'un des symboles $R_1$ et $R_2$ représente un atome d'hydrogène et l'autre représente un radical alkylaryle renfermant 8 à 20 atomes de carbone.

**7.** Procédé selon l'une quelconque des revendications 1 et 6, caractérisé en ce le polyéther est présent dans le milieu réactionnel dès le début de la réaction de substitution.

**8.** Procédé selon l'une quelconque des revendications 1 à 6, caractérisé en ce que le polyéther est introduit dans le milieu réactionnel en cours de réaction de substitution.

**9.** Procédé selon l'une quelconque des revendications 1 à 8, caractérisé en ce que le milieu de substitution comprend un hydrocarbure aromatique, cycloaliphatique ou aliphatique ou un mélange comprenant plusieurs hydrocarbures.

**10.** Procédé selon la revendication 9, caractérisé en ce que le milieu de substitution comprend un mélange d'hydrocarbure et d'éther.

**11.** Les polyphosphazènes tels qu'obtenus par application du procédé selon l'une quelconque des revendications 1 à 10.

Office européen des brevets

# RAPPORT DE RECHERCHE EUROPEENNE

Numero de la demande

EP 91 40 0296

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | US-A-3 896 058 (K.A. REYNARD et al.)<br>* exemples; revendication 4 *<br>--- | 1-3 | C 08 G 79/02<br>C 01 B 21/098 |
| A | BIOMATERIALS vol. 9, no. 6, novembre 1988, pages 509-513, Guildford, Surrey, GB; H.R. ALLCOCK et al.: "Hydrophilic polyphosphazenes as hydrogels: radiation cross-linking and hydrogel characteristics of poly(bis(methoxyethoxyethoxy)phosphazene)"<br>* page 511, colonne 2, paragraphe 2 *<br>--- | 1-4 | |
| A | EP-A-0 145 002 (BORG-WARNER)<br>* exemples 1,2; revendications 1,9-13 *<br>--- | 1-3 | |
| A | US-A-4 113 649 (H. LEHMKUHL et al.)<br>* colonne 1, lignes 54-68; colonne 2, lignes 53-66; exemples 1,11 *<br>----- | 1,4,9, 10 | |
| | | | DOMAINES TECHNIQUES RECHERCHES (Int. Cl.5) |
| | | | C 01 B<br>C 08 G |

Le présent rapport a été établi pour toutes les revendications

| Lieu de la recherche | Date d'achèvement de la recherche | Examinateur |
|---|---|---|
| BERLIN | 07-05-1991 | HOEPFNER W.W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)